# EUROPEAN PATENT APPLICATION

(11) **EP 4 845 002 A1**
(43) Date of publication of application: **25.11.2026**
(21) Application number: 25741808.7
(22) Date of filing: 06.01.2025
(51) Int. Cl.: H02K 19/36, H02K 19/12

(54) **WOUND FIELD ROTARY ELECTRIC MACHINE**

(30) Priority: 17.01.2024 JP 2024005114
(71) Applicant: DENSO CORPORATION, Kariya-city, Aichi 448-8661 (JP)
(72) Inventor: MATSUDA, Masashi, Kariya-city, Aichi 4488661 (JP); YOSHIMURA, Masataka, Kariya-city, Aichi 4488661 (JP); SUZUKI, Takashi, Kariya-city, Aichi 4488661 (JP)
(74) Representative: Kuhnen & Wacker Patent- und Rechtsanwaltsbüro PartG mbB
(86) International application number: PCT/JP2025/000073
(87) International publication number: WO 2025/154563

(57) **Abstract**

A wound-field motor includes; a stator (50) having stator windings (52), a rotor (60) having a rotor core (61) and field windings (70) wound around the rotor core, a first circuit module (141) connected to the field windings and positioned near a first rotor end (X1), which is one end of the rotor core in the axial direction; and a second circuit module (142) connected to the field windings and positioned near a second rotor end (X2), which is another end of the rotor core in the axial direction. Each of the first circuit module and the second circuit module rotates integrally with the rotor and includes electrical components.

## Description

### [CROSS-REFERENCE TO RELATED APPLICATIONS]

This application is based on and claims the benefit of priority from Japanese Application No. 2024-005114, filed on January 17, 2024. The contents of this application are incorporated herein by reference in their entirety.

### [TECHNICAL FIELD]

The disclosure relates to a wound-field motor.

### [BACKGROUND ART]

The rotor of a wound-field motor comprises a rotor core having a plurality of main pole (magnetic pole pieces) arranged circumferentially, and field windings wound around each of the plurality of the main pole. A configuration is known in which a circuit module, equipped with electrical components such as a capacitor and a diode, is provided at one of the axial ends of the rotor (see Patent Document 1). The circuit module holds the electrical components, such as a capacitor, using a component holder.

### [PRIOR ART REFERENCES]

### [PATENT DOCUMENT]

[Patent Document 1] JP2020124100A

### [SUMMARY OF INVENTION]

When a circuit module is provided only at one of the axial ends of the rotor, heat is concentrated at that end when the electrical components in the circuit module generate heat due to electrical current. As the number of electrical components in the circuit module increases, this concentration (or imbalance) of heat becomes more serious. Consequently, there is a concern that the circuit module and its vicinity may become locally overheated in the rotor.

Considering the above-mentioned problem, the present disclosure aims to provide a wound-field motor capable of suppressing overheating of the rotor.

One aspect of the present disclosure is a wound-field motor comprising: a stator having stator windings, a rotor having a rotor core and field windings wound around the rotor core, a first circuit module connected to field windings and positioned near a first rotor end, which is one end of the rotor core in the axial direction, and a second circuit module connected to field windings and positioned near a second rotor end, which is another end of the rotor core in the axial direction. Each of the first circuit module and the second circuit module rotates integrally with the rotor and includes electrical components.

According to one aspect of the present disclosure, the first circuit module connected to field windings and positioned near the first rotor end, which is one end of the rotor core in the axial direction, and the second circuit module connected to field windings and positioned near the second rotor end, which is another end of the rotor core in the axial direction are provided. By this configuration, when the electrical components in the first circuit module and/or the second circuit module generate heat due to the passage of current, the heat is dispersed to both sides of the rotor in the axial direction. As a result, excessive heating of the rotor is suppressed.

### [BRIEF DESCRIPTION OF DRAWINGS]

The above objectives and other objectives, features, and advantages of the present disclosure will become clearer from the following detailed description with reference to the attached drawings. These drawings include:
Fig. 1 is a block diagram of an overall configuration of a motor control system,
Fig. 2 is a diagram showing an inverter and its peripheral components;
Fig. 3 is a cross-sectional view of a rotor and a stator;
Fig. 4 is a diagram showing an electrical circuit provided in the rotor;
Fig. 5 is an exploded perspective view of the rotor;
Fig. 6 is an exploded isometric view of a winding unit in a rotor main body,
Fig. 7 is a cross-sectional view of the rotor main body,
Fig. 8 is a schematic diagram showing a longitudinal cross-sectional configuration of the motor,
Fig. 9 is a cross-sectional view of the rotor main body,
Fig. 10 is a diagram showing an electrical connection between each coil module and each circuit module in the winding unit,
Fig. 11 is a diagram showing a cooling structure of the motor,
Fig. 12 is a cross-sectional view of the rotor main body,
Fig. 13 is a diagram showing an electrical connection between each coil module and each circuit module of the winding unit,
Fig. 14 is a cross-sectional view of the main rotor body,
Fig. 15 is a diagram showing an electrical connection between each coil module and each circuit module of the winding unit,
Fig. 16 is a diagram showing an electrical connection between each coil module and each circuit module in winding unit,
Fig. 17 is a diagram showing an electrical connection between each coil module and each circuit module of the winding unit,
Fig. 18 is a diagram showing an electrical connection between each coil module and each circuit module in the winding unit,
Fig. 19 is a diagram showing an electrical circuit provided by the rotor, and
Fig. 20 is a diagram showing the electrical circuit provided by the rotor.

### [DESCRIPTION OF EMBODIMENTS]

The following describes embodiments embodying a wound-field motor of the present disclosure with reference to drawings. The motor outputs driving power for electric vehicles such as pure electric vehicles and hybrid vehicles.

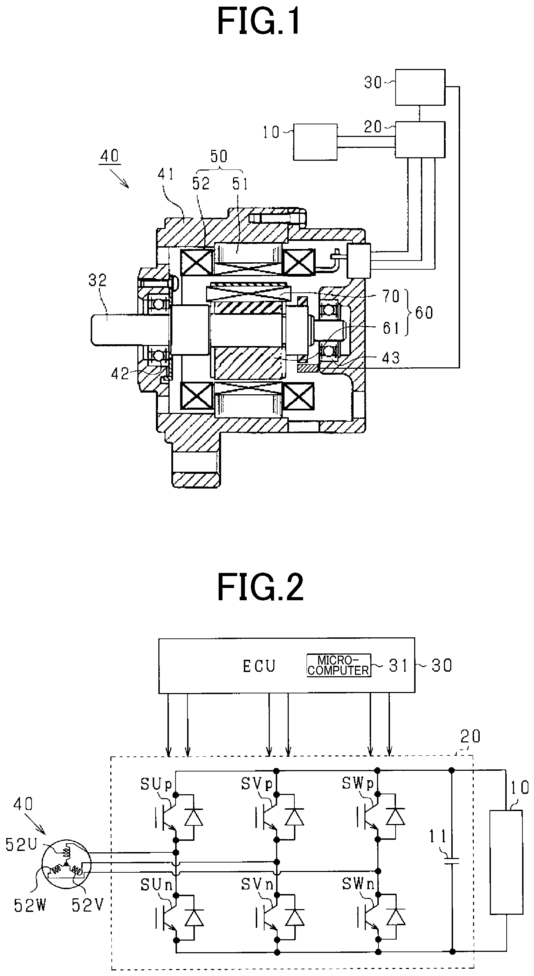

First, with reference to Figure 1, a control system comprising a motor will be described. The control system comprises a DC power supply 10, an inverter 20, a control device 30, and a motor 40. The motor 40 may be a self-excited wound-field synchronous motor. The motor 40, inverter 20, and control device 30 may be integrally configured as an electromechanically integrated drive unit, or the motor 40, inverter 20, and control device 30 may each be configured separately.

The motor 40 is provided with a housing 41, and a stator 50 and a rotor 60 housed within the housing 41. The motor 40 of this embodiment is an inner-rotor type motor where the rotor 60 is positioned radially inside the stator 50.

The stator 50 is provided with a stator core 51 and stator windings 52. The stator windings 52 are formed, for example, of copper wire and include a U-phase winding 52U, a V-phase winding 52V, and a W-phase winding 52W, which are arranged with an offset of 120° therebetween in electrical angle

The rotor 60 is provided with a rotor core 61 and field windings 70. The field windings 70 may be composed, for example, of aluminum wires, which have a low specific gravity and are easy to form. The field windings 70 are not limited to aluminum wires but may also be, for example, copper wires or CNT (carbon nanotubes). The rotary shaft 32 is inserted through the central bore of the rotor core 61. The rotary shaft 32 is rotatably supported in the housing 41 by bearings 42 and 43.

As shown in Figure 2, the inverter 20 includes a series-connected element of a U-phase upper arm switch SUp and a U-phase lower arm switch SUn, a series-connected element of a V-phase upper arm switch SVp and a V-phase lower arm switch SVn, and a series-connected element of a W-phase upper arm switch SWp and a W-phase lower arm switch SWn. A first end of the U-phase winding 52U is connected to a connection point of the U-phase upper arm switch SUp and the U-phase lower arm switch SUn. A first end of the V-phase winding 52V is connected to a connection point of the V-phase upper arm switch SUp and the V-phase lower arm switch SVp. A first end of the W-phase winding 52W is connected to a connection point of the W-phase upper arm switch SWp and the W-phase lower arm switch SWn. A second end of the U-phase winding 52U, a second end of the V-phase winding 52V, and a second end of the W-phase winding 52W are connected to a neutral point. In this embodiment, the U-phase winding 52U, the V-phase winding 52V, and the W-phase winding 52W are connected in a star configuration. In this embodiment, each of the switches SUp to SWn is an IGBT. A freewheeling diode is connected in reverse parallel to each of the switches SUp to SWn.

The positive terminal of the DC power supply 10 is connected to the collector of each of the U-phase upper arm switch SUp, the V-phase upper arm switch SVp, and the W-phase upper arm switch SWp. The negative terminal of the DC power supply 10 is connected to the emitter of each of the U-phase lower arm switch SUn, the V-phase lower arm switch SVn, and the W-phase lower arm switch SWn. A smoothing capacitor 11 is connected in parallel to the DC power supply 10.

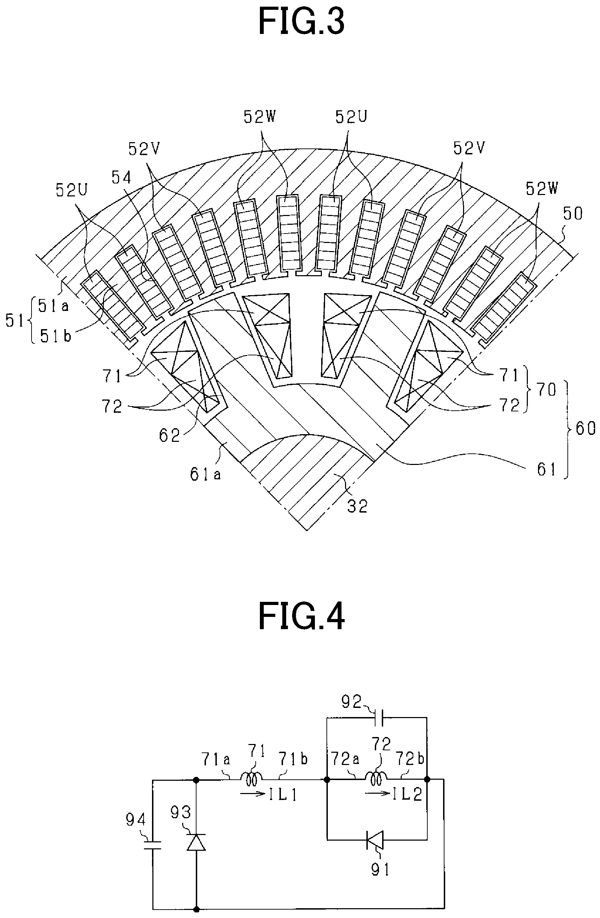

Next, with reference to Figure 3, the stator 50 and rotor 60 will be described.

Each of the stator 50 and the rotor 60 is disposed coaxially with the rotary shaft 32 (specifically, on the rotation center axis O). In the following description, a direction in which the rotary shaft 32 extends is defined as an axial direction, a direction extending radially from the center of the rotary shaft 32 is defined as a radial direction, and a direction extending circumferentially around the rotary shaft 32 is defined as a circumferential direction.

The stator 50 may be composed of laminated steel sheets made of soft magnetic material. The stator 50 has a ring-shaped back yoke 51a and a plurality of teeth 51b protruding radially inward (toward the rotational center axis O) from the back yoke 51a. A plurality of slots 54 are formed circumferentially between adjacent teeth 51b. The stator winding 52 is formed by accommodating phase windings of each phase in a predetermined order within each slot 54. For example, the stator 50 may employ a segment coil structure using a plurality of conductor segments. However, the structure of the stator winding 52 is arbitrary.

The rotor 60 may be composed of laminated steel sheets made of soft magnetic material. The rotor 60 has a cylindrical rotor core 61 and a plurality of main poles 62 protruding radially outward (away from the rotational center axis O) from the rotor core 61. In this embodiment, eight main poles 62 are provided at equal intervals in the circumferential direction.

The field windings 70 includes a first winding 71 and second winding 72. In each main pole 62, the first winding 71 is wound radially outward, and the second winding 72 is wound radially inward relative to first winding 71. In each main pole 62, winding directions of the first winding 71 and the second winding 72 are the same. Among circumferentially adjacent main poles 62, the winding directions of the first winding 71 and the second winding 72 wound on one main pole 62 are opposite to those of the first winding 71 and the second winding 72 wound on the other main pole 62. Consequently, the magnetization directions of circumferentially adjacent main poles 62 are opposite. In the rotor 60, the multiple main poles 62 provided on the rotor core 61 and the field windings 70 wound on each main pole 62 respectively form multiple magnetic poles (field poles) arranged circumferentially.

Figure 4 is a diagram showing an electrical circuit on the rotor 60 side, which includes the first winding 71 and the second winding 72. A second terminal 71b of the first winding 71 is connected to a first terminal 72a of the second winding 72. Consequently, the first winding 71 is connected in series with the second winding 72. A diode 91 and a capacitor 92 are connected to the second terminal 71b of the first winding 71 in parallel to the second winding 72. A diode 93 and a capacitor 94 are connected in series to the series connected element of the first winding 71 and the second winding 72. In the following description, the diode 91 and the capacitor 92, which are connected in parallel to the second winding 72, are also referred to as a parallel diode 91 and a parallel capacitor 92, respectively. The diode 93 and the capacitor 94, which are connected in series to the series connected element of the first winding 71 and the second winding 72, are also referred to as a series diode 93 and a series capacitor 94, respectively. Each of the capacitor 92 and the capacitor 94 may be, for example, a ceramic capacitor or a film capacitor.

The cathode of the parallel diode 91 is connected to the first terminal 72a of the second winding 72, and the anode of the parallel diode 91 is connected to a second terminal 72b of the second winding 72. As a result, in the closed circuit including the second winding 72 and the parallel diode 91, current flows in one direction from the anode of the parallel diode 91 to the cathode of the parallel diode 91.The cathode of the series diode 93 is connected to the first terminal 71a of the first winding 71, and the anode of the series diode 93 is connected to the second terminal 72b of the second winding 72. As a result, the field currents flowing through the respective windings 71 and 72 are rectified. In this embodiment, the number of wirings of the second winding 72 is greater than that of the first winding 71.

As shown in Figure 2, the control device 30 is an Electronic Control Unit (ECU) primarily composed of a microcontroller 31. The microcontroller 31 includes a CPU (Central Processing Unit). The functions provided by the microcontroller 31 are provided by software recorded in a physical memory device and a computer executing it, by software alone, by hardware alone, or by a combination thereof. For example, when the microcontroller 31 is provided by electronic circuitry as hardware, the electronic circuitry includes digital circuits containing numerous logic circuits or analog circuits. For instance, the microcontroller 31 may execute a program stored in a non-transitory tangible storage medium serving as its own memory section. By executing the set of instructions constituting the program, the method corresponding to the program is performed. The storage unit may be, for example, non-volatile memory. The program stored in the storage unit may be updated via a communication network such as the Internet using a method known as OTA (Over The Air).

The control device 30 generates drive signals to turn the switches SUp to SWn, which constitute the inverter 20, on and off. More specifically, the control device 30 generates the drive signals to turn on and off each arm switch SUp to SWn for converting DC power supplied from the DC power supply 10 into AC power and supplying it to the U-phase winding 52U, the V-phase winding 52V, and the W-phase winding 52W, respectively. The generated drive signals are supplied to the gates of each arm switch SUp to SWn. As a result, in each phase, the upper arm switch and the lower arm switch are turned on alternately with a dead time in between.

The control device 30 turns on and off each switch SUp to SWn for causing composite current including high-frequency excitation current and fundamental wave current to flow through each phase winding 52U, 52V, and 52W. Frequency of the high-frequency excitation current is higher than frequency of the fundamental wave current. The fundamental wave current is primarily current for generating torque in the motor 40. The high-frequency excitation current is primarily current for exciting the field windings 70 to induce the field current in the field windings 70. Phase currents flowing through the phase windings 52U, 52V, and 52W are phase-shifted by 120° therebetween in electrical angle.

The high-frequency current flowing through the stator windings 52 may be a harmonic current whose frequency is N times the frequency of the fundamental current (where N is an integer greater than or equal to 2), or it may be a current whose frequency deviates from N times the frequency of the fundamental current.

When a high-frequency current flows through the stator windings 52, voltages are induced in each of the first winding 71 and the second winding 72, causing field currents to flow through them. The induced voltages in the first winding 71 and the second winding 72, for example, are in phase with each other. The currents IL1 and IL2 flowing through the first winding 71 and the second winding 72, respectively, contain frequency components of the high-frequency current.

In the electrical circuit shown in Figure 4, when each of the first winding 71 and the second winding 72 is energized as the stator winding 52 is energized, current flows from the first winding 71 to the second winding 72.When the voltage between the terminals of the second winding 72 exceeds the forward voltage of the parallel diode 91, the current IL2 flows through the second winding 72 in the closed circuit including the second winding 72 and the parallel diode 91. The current IL2 is higher than the current IL1 flowing through first winding 71. When current flows in the closed circuit including the second winding 72 and the parallel diode 91, the DC component of the field current increases. In this way, the DC component of the magnetic flux of the rotor 60 is increased, thereby increasing the torque of the motor 40.

When current flows in the closed circuit including the second winding 72 and the parallel diode 91, a part of that flows through the first winding 71. In this case, the directions of the current IL1 flowing through the first winding 71 and the current IL2 flowing through the second winding 72 are opposite to each other. As a result, the ripple of the field current which is the sum of the currents IL1 and IL2 is reduced, thereby reducing the torque ripple of the motor 40.

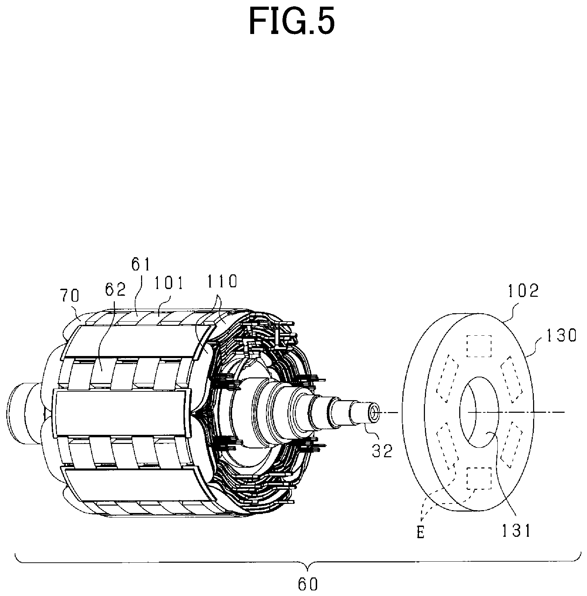

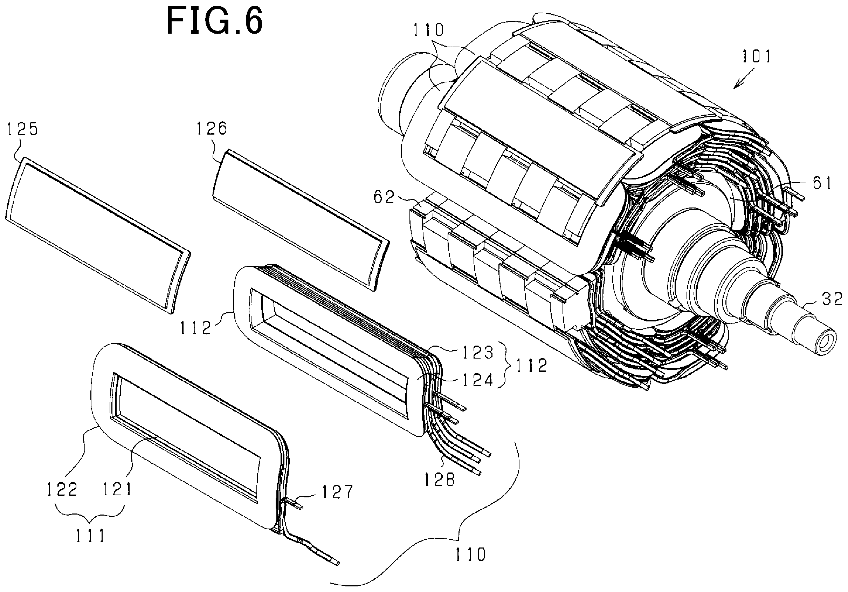

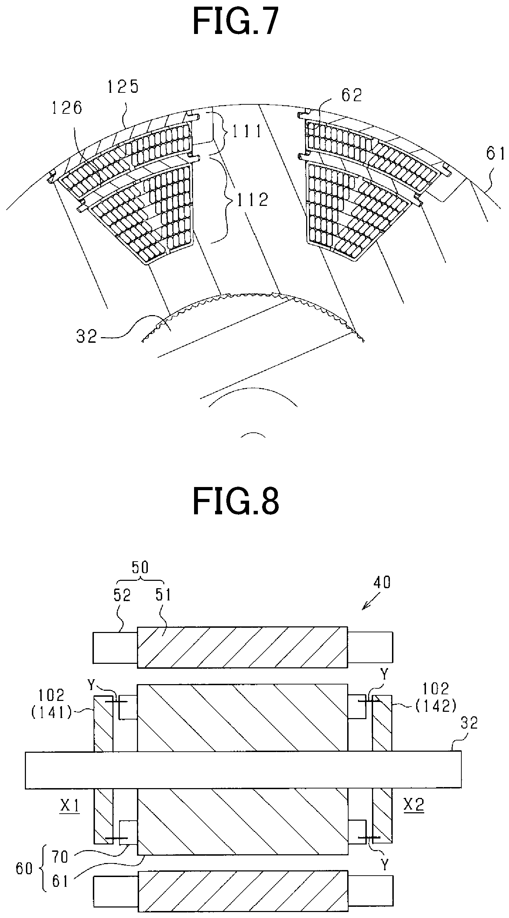

Next, a configuration of the rotor 60 will be described in greater detail. Figure 5 is an exploded perspective view of the rotor 60. Figure 6 is an exploded perspective view of a winding unit 110 in a rotor main body 101. Figure 7 is a cross-sectional view showing the cross-sectional structure of a portion of the rotor main body 101.

The rotor 60 is provided with a rotor main body 101 and a circuit module 102 on one end side of the rotor main body 101 in the axial direction. As described in Figure 3, the rotor main body 101 is provided with the rotor core 61 and the field windings 70. The rotary shaft 32 is fixed in the central hole of the rotor core 61. The field windings 70 includes a plurality of winding units 110 arranged in a circumferential direction. The rotary shaft 32 is inserted through the hollow portion of a circuit module 102, and the circuit module 102 is fixed to the rotary shaft 32. The circuit module 102 is provided in a position axially facing the coil end of the field windings 70 that is farther from the rotary shaft 32 than the rotor core 61. The circuit module 102 is an example of an "electrical circuit module."

The rotor main body 101 is provided with the plurality of winding units 110 for each magnetic pole of the rotor 60. Each of the winding units 110 is formed in a ring shape with the axial direction as its longitudinal direction and is mounted on the rotor core 61 with the main pole 62 of the rotor core 61 inserted into its hollow portion. In this embodiment, "pole coils" are constituted by the winding units 110.

The winding unit 110 includes a first coil module 111, which is radially outer when mounted on the main pole 62, and a second coil module 112, which is radially inner when mounted on the main pole 62. The first coil module 111 is a part of the first winding 71, and the second coil module 112 is a part of the second winding 72.

The first coil module 111 includes a ring-shaped coil body 121 formed by wiring, consisting of flat rectangular wires, wound multiple times in both the circumferential and radial directions, and a thin plate-shaped insulator 122 attached to the coil body 121. The insulator 122 includes a portion extending circumferentially and covering the outer and inner peripheral portions of the coil body 121 in the radial direction, and a portion extending radially and covering the hollow portion of the coil body 121. In other words, the outer peripheral portion, the inner peripheral portion, and the hollow portion of the coil body 121 are insulated and covered by the insulator 122.

The second coil module 112 includes a ring-shaped coil body 123 formed by wirings made of flat rectangular wires wound multiple times in both the circumferential and radial directions, and a thin plate-shaped insulator 124 mounted on the coil body 123.The insulator 124 includes a first portion extending circumferentially and covering the outer and inner circumferential portions of the coil body 123, and a second portion extending radially and covering the hollow portion of the coil body 123. In other words, the outer circumferential portion, the inner circumferential portion, and the hollow portion of the coil body 123 are insulated by the insulator 124.

Each of the coil body 121 and the coil body 123 may be an air-core coil configured, for example, as an α-wound coil. Furthermore, the cross-sectional shape of the flat rectangular wire used in each of the coil body 121 and the coil body 123 is approximately rectangular (specifically, approximately rectangular in shape). The flat rectangular wire includes a conductor portion formed of aluminum or the like and an insulating layer covering the conductor portion. Alternatively, the wiring constituting the coil body may be a round wire having a circular cross-section.

As shown in Figure 7, in the first coil module 111, the wiring is wound in two layers in the radial direction, and in the second coil module 112, the wiring is wound in six layers in the radial direction. Furthermore, in each of the first coil module 111 and the second coil module 112, the number of circumferential windings (in other words, the number of wirings arranged circumferentially) differs, with the number of windings being greater on the radially outer side than on the radially inner side. This results in an improvement in the volume utilization ratio in field windings 70. Note that, if the volume fraction is disregarded, it is also possible to make the number of circumferential windings identical for each of the radially arranged coil bodies 121 and coil bodies 123.

In the rotor main body 101, retaining plates 125 and 126 are provided between the two main poles 62 of the rotor core 61. The retaining plates 125 and 126 maintain the assembled state of each coil module 111 and 112 while the first coil module 111 and the second coil module 112 are mounted on each main pole 62. The retaining plate 125 is mounted radially outward from the first coil module 111, and the retaining plate 126 is mounted between the first coil module 111 and the second coil module 112.

As shown in Figure 6, in each winding unit 110 of each magnetic pole, two wire ends 127 are drawn out axially from the first coil module 111, and six wire ends 128 are drawn out axially from the second coil module 112. In each winding unit 110 arranged circumferentially, the wire ends 127 and the wire ends 128 are connected to each other by welding or the like, thereby connecting the multiple first coil modules 111 provided in each main pole 62 in series and connecting the multiple second coil modules 112 provided in each main pole 62 in series.

The configuration for connecting the windings (coil module 11 and coil module 112) of each main pole 62 arranged circumferentially need not be the configuration described above, in which the wire end 127 of coil module 111 and the wire end 128 of coil module 112 are joined by welding or the like. For example, the configuration for connecting the windings of each main pole 62 may also be a configuration in which the wiring is wound continuously across multiple main poles 62 (a continuous winding configuration).

In Figure 5, the circuit module 102 includes a component holder 130 formed from an electrically insulating material. For example, the component holder 130 may be a molded body formed from a resin. The component holder 130 has a substantially disc-shaped configuration with a central hole 131 at its center. The component holder 130 is fixed to the rotary shaft 32.

The component holder 130 holds electrical components E, such as the diode 91, the diode 93, the capacitor 92, and the capacitor 94, which are arranged to surround the central hole 131. Each of these electrical components E may be electrically connected via a busbar (not shown). In the component holder 130, the winding ends at both ends of the first winding 71 formed by the plurality of first coil modules 111, and the winding ends at both ends of the second winding 72 formed by the plurality of second coil modules 112, are each electrically connected to the electrical circuit including components such as the diode 91, the diode 93, the capacitor 92, and the capacitor 94 (see Fig. 4).

In a configuration where the circuit module 102 is arranged on one axial side of the rotor 60, heat concentrates on that one axial side of the rotor 60 when the electrical component E generates heat due to the flow of current in the circuit module 102. For example, as the number of the electrical components E in the circuit module 102 increases, heat imbalance becomes more pronounced. In this case, there is a concern that the circuit module 102 may become locally overheated within the rotor 60.

In this embodiment, as shown in Figure 8, the circuit module 102 includes a first circuit module 141 and a second circuit module 142. The first circuit module 141 is installed at the side of the first rotor end X1 (the left side of the figure), which is one end of the rotor core 61 in the axial direction, and the second circuit module 142 is installed at the side of the second rotor end X2 (the right side of the figure), which is the other end of the rotor core 61 in the axial direction.

Each of the first circuit module 141 and the second circuit module 142 is provided with the electrical circuit as shown in Figure 4. The electrical circuit of the first circuit module 141 is electrically connected, at the side of the first rotor end X1, to half of the plurality of winding units 110 via a winding terminal Y. The electrical circuit of the second circuit module 142 is electrically connected, on the second rotor end X2 side, to the remaining half of the plurality of winding unit 110 via a winding terminal Y. The winding terminal Y on the first rotor end X1 side corresponds to the first terminal 71a and the second terminal 71b of the first winding 71, in Figure 4. Also, the winding terminal Y on the winding terminal Y on the second rotor end X2 side corresponds to the first terminal 72a and the second terminal 72b of second winding 72, in Figure 4.

In the motor 40, each of the first circuit module 141 and the second circuit module 142 may be arranged in a hollow space surrounded by coil ends SE1 and SE2 of the stator winding 52 on both axial sides of the stator winding 52. In other words, the portions of the stator winding 52 located axially outward from the axial end faces of the stator core 51 are the coil ends SE1 and SE 2. Each of the coil ends SE1 and SE2 is a stator coil end. At the one axial end (the side of the first rotor end X1), the first circuit module 141 is arranged on the inner circumference of the coil ends SE1 arranged in a circular ring. At the other axial end (the side of the second rotor end X2), the second circuit module 142 is arranged on the inner circumference of the coil ends SE2 arranged in a circular ring.

As described above, the plurality of winding units 110 are divided into two groups of equal size, and respective groups of the winding units 110 are electrically connected to the first circuit module 141 and second circuit module 142 on both sides of the axial direction. The specific configuration is described below.

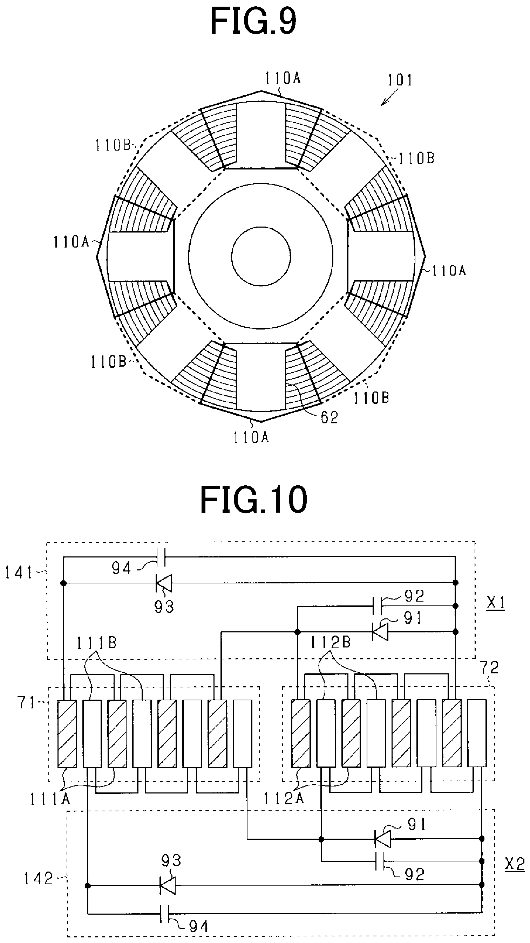

Figure 9 is a cross-sectional view of the rotor main body 101. Figure 9 shows eight main poles 62 arranged circumferentially and winding units 110 wound around each main pole 62. In Figure 9, four of the eight winding units 110 connected to the first circuit module 141 are enclosed in a solid-line frame and are labeled "winding unit 110A". The remaining four winding units 110 connected to the second circuit module 142 are enclosed in a dashed frame and are labeled "winding unit 110B".

The four winding units 110A connected to the first circuit module 141 are defined as the "first coil group", and the four winding units 110B connected to the second circuit module 142 are defined as the "second coil group". The winding units 110A included in the first coil group and the winding units 110B included in the second coil group are arranged alternately, one by one, in the circumferential direction. In this embodiment, the winding directions of the wirings in two circumferentially adjacent winding unit s 110 are opposite to each other. Therefore, the winding directions of each winding unit 110A belonging to the first coil group are the same, and the winding directions of each winding unit 110B belonging to the second coil group are the same. The winding directions of each winding unit 110A included in the first coil group and each winding unit 110B included in the second coil group are opposite to one another.

Figure 10 is a diagram illustrating the electrical connection states between the first coil module 111 and second coil module 112 of each winding unit 110, the first circuit module 141, and second circuit module 142.

Figure 10 shows the eight first coil modules 111 that constitute the first winding 71 and the eight second coil modules 112 that constitute the second winding 72 arranged side by side in the left-right direction. The top of the figure represents the first rotor end X1 side, and the bottom represents the second rotor end X2 side. The first circuit module 141 is positioned on the first rotor end X1 side, and the second circuit module 142 is positioned on the second rotor end X2 side. Among the eight first coil modules 111 and the eight second coil modules 112, those included in the first coil group are described as "coil module 111A" or "coil module 112A", and those included in the second coil group are described as "coil module 111B" or "coil module 112B" to distinguish them. The coil module 111A and coil module 112A are shown with hatching.

In Figure 10, the four coil modules 111A and the four coil modules 112A included in the first coil group are electrically connected to the first circuit module 141 on the first rotor end X1 side. The four coil modules 111B and the four coil modules 112B included in the second coil group are electrically connected to the second circuit module 142 on the second rotor end X2 side. As shown in Figure 4, each of the first circuit module 141 and the second circuit module 142 has an electrical circuit formed by the diode 91, the diode 93, the capacitor 92, and the capacitor 94. Each of them can rectify the field current. However, in each of the first circuit module 141 and the second circuit module 142, the capacitances of the capacitors are determined based on the number of winding units 110 in each coil group; compared to a configuration in which one circuit module 102 is electrically connected to eight winding unit 110, the capacitance may be approximately half.

In the four coil modules 111A and the four coil modules 112A included in the first coil group, the wire terminals of the coil module 111A and the coil modules 112A are drawn out at the side of the first rotor end X1, and the wire terminals are connected to one another. On the side of the first rotor end X1, the wire terminals of the first coil module 111A, which are both ends of the first winding 71, and the wire terminals of the second coil module 112A, which are both ends of the second winding 72, are connected to the electrical circuit of the first circuit module 141 as shown in the figure.

In the four coil modules 111B and the four coil modules 112B included in the second coil group, the wire terminals of the coil module 111B and the coil modules 112B are drawn out at the side of the second rotor end X2, and the wire terminals are connected to one another. On the side of the second rotor end X2, the wire terminals of the first coil module 111B, which are both ends of the first winding 71, and the wire terminals of the second coil module 112B, which are both ends of the second winding 72, are connected to the electrical circuit of the second circuit module 142 as shown in the figure.

As shown in Figures 9 and 10, the configuration in which the winding unit 110A, included in the first coil group, and the winding unit 110B, included in the second coil group, are arranged alternately one by one in the circumferential direction in each main pole 62 of the rotor core 61, are realized by providing four or more, and an even number, of main poles 62 in the rotor core 61. Therefore, the number of main poles 62 provided in the rotor core 61 may be 4, 6, 10, 12, 14, 16, etc., in addition to the aforementioned 8.

According to the configuration shown in Figure 10, when the stator windings 52 are energized, the high-frequency current flowing through the stator windings 52 causes a field current to flow through each coil module 111A, 112A (winding unit 110A) included in the first coil group and each coil module 111B,112B (winding unit 110B) included in the second coil group, respectively, through the respective electrical circuits of the first circuit module 141 and the second circuit module 142. In this case, a field magnetic flux is generated individually in each coil group. This allows the excitation of the field windings 70 in the rotor 60 to be performed with redundancy.

Each of the first circuit module 141 and the second circuit module 142 may be configured such that, when the stator winding 52 is energized, a field current in similar level flows in parallel through the coil modules 111 and 112 of each coil group. In this case, compared to connecting all eight coil modules in series, the inductance of the coil modules 111 and 112 in each coil group becomes approximately half, and since the field currents generated in each coil group are of similar magnitude, the combined field flux generated by both coil groups is of similar magnitude. The torque generated by each coil group is approximately half that generated when all eight coil modules are connected in series, and the voltage generated by each coil group is slightly higher than half that generated when all eight coil modules are connected in series.

In the configurations shown in Figures 9 and 10, the coil modules 111A and 112A (winding unit 110A) included in the first coil group and the coil modules 111B and 112B (winding unit 110B) included in the second coil group are arranged in a circumferential direction, alternating one by one with the main poles 62 arranged circumferentially on the rotor 60. Consequently, when the field windings 70 is energized by the first circuit module 141 and the second circuit module 142, the field flux generated at each pole by the energization of the first circuit module 141 and the field flux generated at each pole by the energization of the second circuit module 142 are distributed evenly and finely in the circumferential direction. As a result, it is possible to generate a field flux at positions corresponding to half the total number of poles in the circumferential direction of the rotor 60 (in Figure 9, these positions form a quadrilateral).

Even if one of the first circuit module 141 and second circuit module 142 fails and malfunctions, the other can still excite field windings 70, allowing the motor 40 to continue rotating. In other words, since the field windings 70 is divided into two mutually independent systems, even if a failure occurs in either the first circuit module 141 or the second circuit module 142, the rotational drive of motor 40 is maintained while generating at least about half the torque.

In the configuration described above, where the circuit module 102 is divided into first circuit module 141 and second circuit module 142, it is possible to reduce the number of electrical components or decrease the size of the electrical components in each of the first circuit module 141 and the second circuit module 142. Consequently, the size of each of the first circuit module 141 and the second circuit module 142 is decreased. In other words, the axial thickness of each of the first circuit module 141 and the second circuit module 142 is reduced. This enables the miniaturization of the motor 40.

If the orientations of the diode 91 and the diode 93 are reversed in either the first circuit module 141 or the second circuit module 142, the direction of the field current in winding unit 110, which is connected to that circuit module, will be reversed. Therefore, even in a configuration where all circumferential windings in the field windings 70 are wound in the same direction, it is possible to generate field fluxes of opposite polarity in each circumferentially adjacent main poles 62.

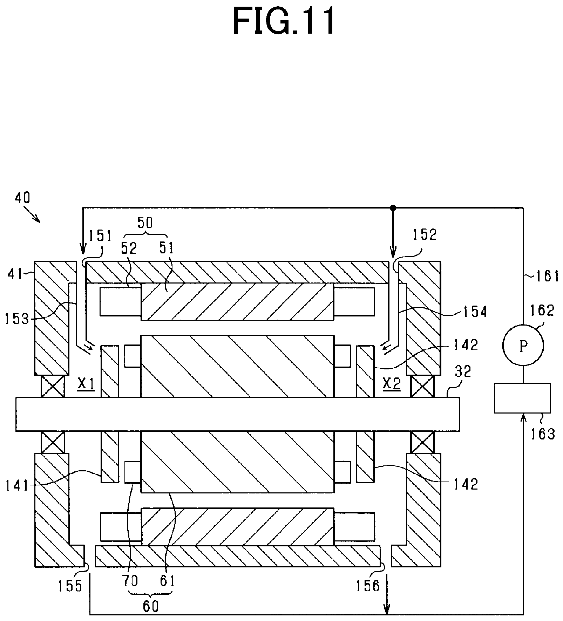

In the motor 40 according to this embodiment, the first circuit module 141 and the second circuit module 142, each arranged at the respective axial ends, may have a configuration in which they are cooled individually. This configuration is explained with reference to Figure 11. In Figure 11, the left side of the figure is the first rotor end X1 side, and the right side is the second rotor end X2 side. In this configuration, the motor 40 includes a first coolant supply unit that supplies coolant to the first circuit module 141 and a second coolant supply unit that supplies coolant to the second circuit module 142. Each of the first circuit module 141 and the second circuit module 142 are cooled using a coolant such as cooling water or cooling oil.

In the housing 41 of the motor 40, inlets 151 and 152 are provided at both axial ends of the rotor 60 (namely, the first rotor end X1 side and the second rotor end X2 side), respectively, as coolant intakes for drawing in the coolant. On the first rotor end X1 side of the housing 41, a coolant passage 153 is provided to guide the coolant drawn in via the inlet 151 toward the first circuit module 141. On the second rotor end X2 side of the housing 41, a coolant passage 154 is provided to guide the coolant drawn in via the inlet 152 toward the second circuit module 142. The combined element of the inlet 151 and the coolant passage 153 is an example of a "first coolant supply section". The combined element of the inlet 152 and the coolant passage 154 is an example of a "second coolant supply section".

The housing 41 is provided with outlets 155 and 156 at both axial ends of rotor 60 (i.e., the first rotor end X1 side and the second rotor end X2 side), respectively, as coolant discharging portions for discharging coolant.

A coolant supply system, which supplies coolant to the motor 40, is provided with a circulation passage 161 for circulating the coolant, and a circulation pump 162 and a heat dissipation unit 163 provided in the circulation passage 161. The circulation pump 162 may be, for example, an electric pump. Furthermore, the heat dissipation section 163 may be, for example, a radiator that releases heat from the coolant into the atmosphere. The coolant flows through the circulation passage 161 driven by the circulation pump 162.

When the motor 40 operates, the coolant flowing in from the circulation passage 161 is supplied to the first circuit module 141 and the second circuit module 142, via the coolant passage 153 and the coolant passage 154 respectively. As a result, the coolant cools each of the first circuit module 141 and the second circuit module 142 separately.

As the coolant supply system, separate systems may be configured for the first circuit module 141 and the second circuit module 142. In this case, coolant is supplied to the first circuit module 141 and the second circuit module 142 via separate circulation passages 161, respectively.

According to the present embodiment described in detail above, the following excellent effects are obtained.

In the rotor 60, the first circuit module 141 is positioned at the side of the first rotor end X1, which is one axial end of rotor core 61, and the second circuit module 142 is positioned at the side of the second rotor end X2, which is the other axial end of rotor core 61. Consequently, when the electrical components in the first circuit module 141 and the second circuit module 142 generate heat due to electrical current, the heat is dispersed to both sides of the rotor 60 in the axial direction. In other words, heat sources are dispersed within the rotor 60. As a result, excessive overheating of the rotor 60 is suppressed.

Among the plurality of winding units 110 (coil modules 111, 112) arranged circumferentially, half of the winding units 110A are designated as the first coil group, and the remaining half, the winding unit 110B are designated as the second coil group. The winding ends of the first coil group are electrically connected to the electrical components of the first circuit module 141, and the winding ends of the second coil group are electrically connected to the electrical components of the second circuit module 142. This allows a field current in the first coil group and a field current in the second coil group to be energized independently. In other words, the excitation of the field windings 70 in the rotor 60 is performed with redundancy. This redundancy improves fault tolerance.

In the winding unit 110A, which is included in the first coil group, wire ends are drawn out on the first rotor end X1 side, and the wire ends are electrically connected to the electrical components of the first circuit module 141. In the winding unit 110B, which is included in the second coil group, wire ends are drawn out on the second rotor end X2 side, and the wire ends are electrically connected to the electrical components of the second circuit module 142. This allows for appropriate electrical connections to be made at both the first rotor end X1 side and the second rotor end X2 side.

In the rotor core 61, the winding unit 110A included in the first coil group and the winding unit 110B included in the second coil group are arranged in a circumferential direction, alternating one by one with respect to each main pole 62 arranged circumferentially. Consequently, when the field windings 70 is energized redundantly by the first circuit module 141 and the second circuit module 142, the field flux generated at each magnetic pole by the energization of the first circuit module 141 and the field flux generated at each magnetic pole by the energization of the second circuit module 142 are distributed evenly and finely in the circumferential direction. This reduces rotational vibration in the rotor 60.

The first circuit module 141 and the second circuit module 142 include the diode 91, the diode 93, the capacitor 92, and the capacitor 94, and have electrical circuits that rectify the field currents in the first coil group and the second coil group when the stator windings 52 are energized, respectively. Consequently, the first coil group and the second coil group are supplied with field currents that are equal to each other by the first circuit module 141 and the second circuit module 142, respectively. Therefore, even if a failure occurs in either the first circuit module 141 or the second circuit module 142, it is possible to generate at least about half of the torque.

The configuration is designed to supply coolant individually to each of the first circuit module 141 and the second circuit module 142. This allows for enhanced cooling performance in both the first circuit module 141 and the second circuit module 142.

### (Other Embodiments)

The above embodiment may be modified, for example, as follows.
(1) In the rotor 60, the first coil group and the second coil group may be separated as follows.

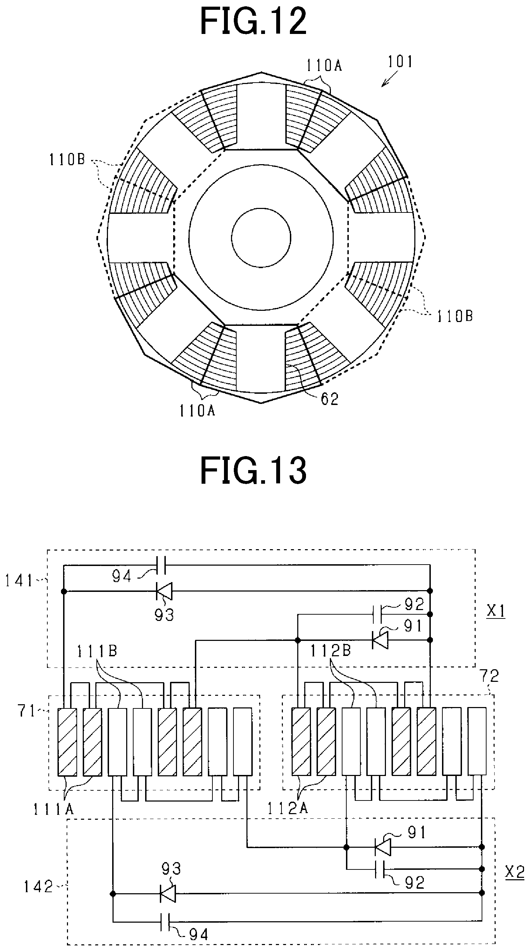

The first coil group and the second coil group may have the configurations shown in Figures 12 and 13. Figure 12 is a cross-sectional view of the rotor main body 101. Figure 13 is a diagram showing the electrical connection states between the first coil module 111 and the second coil module 112 of each winding unit 110, and the first circuit module 141 and the second circuit module 142.

In the configuration shown in Figure 12, the winding unit 110A, which is included in the first coil group, and the winding unit 110B, which is included in the second coil group, are arranged alternately in pairs in the circumferential direction.

In Figure 13, each of the four coil modules 111A and the four coil modules 112A included in the first coil group is electrically connected to the first circuit module 141 on the first rotor end X1 side. Furthermore, each of the four coil modules 111B and the four coil modules 112B included in the second coil group is electrically connected to the second circuit module 142 on the second rotor end X2 side.

The configuration in which the winding unit 110A, included in the first coil group, and the winding unit 110B, included in the second coil group, are arranged alternately in the circumferential direction in groups of two at each main pole 62 of the rotor core 61 are realized by providing 4×n (where n is an integer) main poles 62 in the rotor core 61. Therefore, the number of main poles 62 provided in the rotor core 61 may be 4, 12, 16, etc., in addition to the aforementioned 8.

According to the configurations shown in Figures 12 and 13 above, when the field windings 70 are energized redundantly by the first circuit module 141 and the second circuit module 142, the field flux generated at each pole by the energization of the first circuit module 141 and the field flux generated at each pole by the energization of the second circuit module 142 are evenly distributed in the circumferential direction. This reduces rotational vibration in the rotor 60.

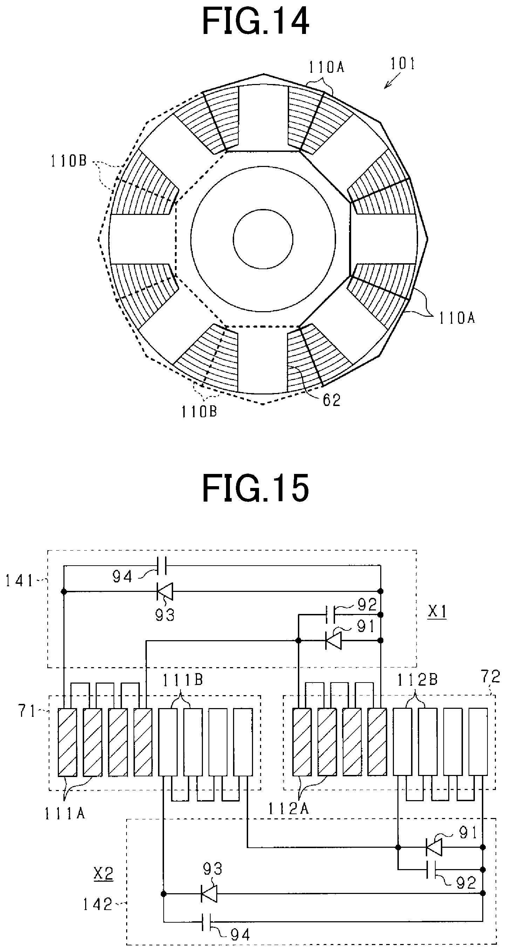

The first coil group and the second coil group may have the configuration shown in Figures 14 and 15. Figure 14 is a cross-sectional view of the rotor main body 101. Figure 15 is a diagram showing the electrical connection state between the first coil module 111 and the second coil module 112 of each winding unit 110 and the first circuit module 141 and the second circuit module 142.

In the configuration shown in Figure 14, the winding unit 110A, which is included in the first coil group, and the winding unit 110B, which is included in the second coil group, are divided equally into two halves in the circumferential direction of the rotor core 61 and are arranged on one side and the other side, respectively.

In Figure 15, the four coil modules 111A and the four coil modules 112A included in the first coil group are electrically connected to the first circuit module 141 on the first rotor end X1 side. Furthermore, the four coil modules 111B and the four coil modules 112B included in the second coil group are electrically connected to the second circuit module 142 on the second rotor end X2 side.

According to the configurations shown in Figures 14 and 15, since the coil modules 111 and the coil modules 112 included in the same coil group are arranged together, the length of the wiring crossing sections between each main pole 62 is reduced. Consequently, it is possible to reduce the winding resistance. Furthermore, in a continuous winding configuration, the wiring is wound continuously around each main pole 62 that is close to one another, which is expected to facilitate the winding process.

(2) In the above embodiments, the eight winding units 110 arranged in the circumferential direction were divided into two coil groups, and for each coil group, electrical circuits for the first circuit module 141 and the second circuit module 142 are provided with the same circuit configuration. However, the configuration of the electrical circuits for the first circuit module 141 and the second circuit module 142 is not limited to this. Other configurations are described below.

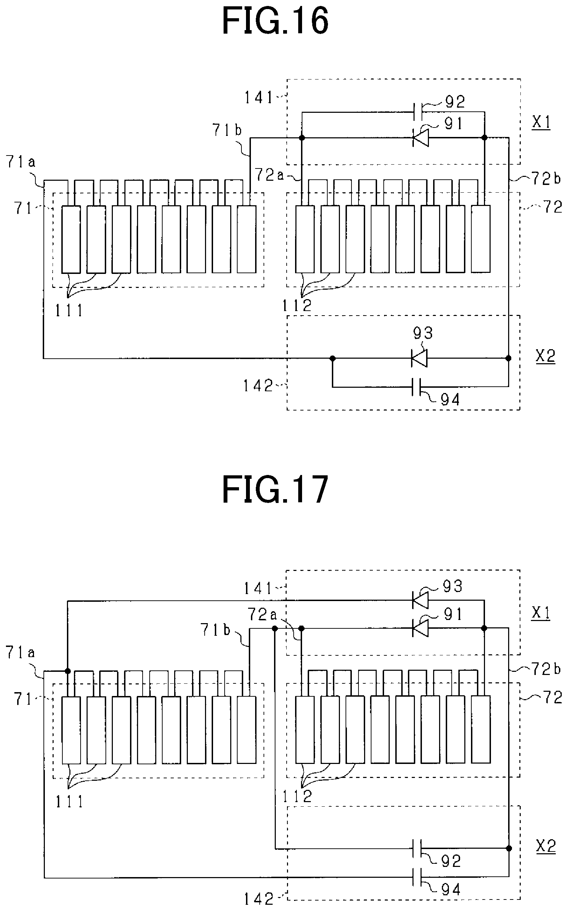

Figures 16 to 18 are diagrams illustrating the electrical connection states between the first coil module 111 and second coil module 112 of each winding unit 110 and the first circuit module 141 and second circuit module 142.

In Figure 16, the electrical circuit of the first circuit module 141 is connected to both ends of second winding 72 in the series connection of first winding 71 and second winding 72, and is configured as a closed circuit (first closed circuit) that rectifies the current flowing through the second winding 72 in one direction when the stator winding 52 is energized. Furthermore, the electrical circuit of the second circuit module 142 is connected to both ends of the series connection of the first winding 71 and the second winding 72, and is configured as a closed circuit (second closed circuit) that rectifies the current flowing through the series connection in one direction when the stator winding 52 is energized. As described in Figure 4, the first closed circuit comprises parallel diode 91 and parallel capacitor 92. Furthermore, the second closed circuit comprises series diode 93 and series capacitor 94.

According to the above configuration, in the first closed circuit formed by connecting both ends of the second winding 72, and the second closed circuit formed by connecting both ends of the series connection of the first winding 71 and the second winding 72, it becomes easy to individually change the electrical components used in each of these closed circuits, thereby improving design flexibility.

In the configuration shown in Figure 16, for example, one winding end of second winding 72 (the second terminal 72b in Figure 4) is connected to the first circuit module 141 and the second circuit module 142, respectively, on both sides in the axial direction. In this case, an axial jumper extending in the axial direction may be connected to the winding end (second terminal 72b) of the second winding 72, and the first circuit module 141 side and the second circuit module 142 side may be connected via that axial jumper. Specifically, for example, a groove-shaped or hole-shaped jumper insertion portion extending in the axial direction may be provided in the retaining plate 125 or retaining plate 126 shown in Figure 7, and the first circuit module 141 and the second circuit module 142 on both axial sides may be connected to each other with the axial jumper inserted into that jumper insertion portion. The winding end (first terminal 71a) of first winding 71 may have a similar configuration.

In Figure 16, instead of the configuration in which the first closed circuit is connected in parallel to the radially inner second winding 72, it is also possible to configure such that the first closed circuit is connected in parallel to the radially outer first winding 71.

In the configuration shown in Figure 17, the electrical circuit of the first circuit module 141 includes the diode 91 and the diode 93, among the diode 91, the diode 93, the capacitors 92, and the capacitor 94 that constitute the electrical circuit shown in Figure 4. Furthermore, the electrical circuit of the second circuit module 142 comprises the capacitor 92 and the capacitor 94, among the diode 91, the diode 93, the capacitors 92, and the capacitor 94 that constitute the electrical circuit shown in Figure 4.

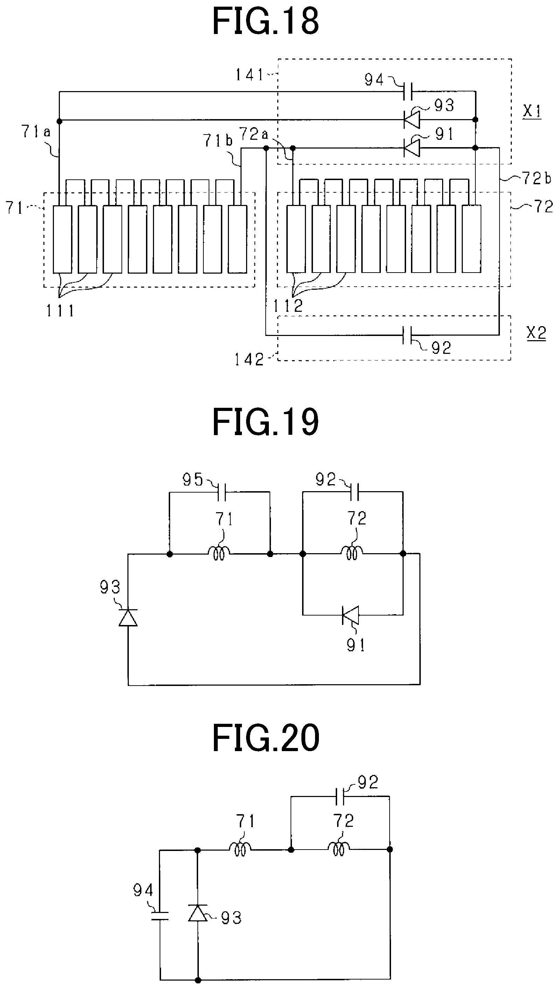

In the configuration of Figure 18, the electrical circuit of the first circuit module 141 comprises the diode 91 and the diode 93 and a portion of the capacitors (capacitor 94) among the diode 91, the diode 93, the capacitors 92, and the capacitor 94 that constitute the electrical circuit shown in Figure 4. Furthermore, the electrical circuit of the second circuit module 142 comprises the remaining capacitor 92 among the diode 91, the diode 93, the capacitors 92, and the capacitor 94 that constitute the electrical circuit shown in Figure 4.

(3) It is also possible to configure the electrical circuit on the rotor 60 side, which includes both the first winding 71 and the second winding 72, as follows.

In the electrical circuit shown in Figure 19, the parallel diode 91 and the parallel capacitor 92 are connected in parallel to second winding 72. Furthermore, the parallel capacitor 95 is connected in parallel to the first winding 71. The series diode 93 is connected in series to the series connection of the first winding 71 and the second winding 72. When compared to the electrical circuit shown in Figure 4, Figure 19 shows that, in place of the series capacitor 94 in Figure 4, the first winding 71 is provided with the parallel capacitor 95.

In the electrical circuit shown in Figure 20, the parallel capacitor 92 is connected in parallel to the second winding 72. Furthermore, the series diode 93 and the series capacitor 94 are connected in series to the series connection of the first winding 71 and the second winding 72. Compared to the electrical circuit shown in Figure 4, the configuration in Figure 20 omits the parallel diode 91 shown in Figure 4.

Furthermore, the electrical circuit on the rotor 60 side may be configured differently from the configurations shown in Figures 4, 19, and 20. For example, it is possible to configure the circuit such that the capacitor is positioned in a different location, either in parallel or in series with the diode 91, 93 or the respective winding sections 71, 72.

(4) In each of the first circuit module 141 and the second circuit module 142, the amount of heat generated during energization differs depending on the configuration of the electrical circuit in each of the first circuit module 141 and the second circuit module 142. In other words, for example, the amount of heat generated upon energization differs between diode elements and capacitor elements. In this case, it is conceivable that the amount of heat generated when the field current flows through the field windings 70 upon energization of the stator winding 52 differs between the first circuit module 141 and the second circuit module 142.

Taking this into account, the coolant supply rate per unit time may be set differently between the first coolant supply unit, which supplies coolant to the first circuit module 141, and the second coolant supply unit, which supplies coolant to the second circuit module 142. The cooling capacity of each coolant supply unit may be set differently. In this case, it is desirable that the coolant supply rate per unit time be higher for the circuit module either the first circuit module 141 or the second circuit module 142 whose electrical components generate more heat. Consequently, even if the heat generation differs between the first circuit module 141 and the second circuit module 142, each of these circuit modules is cooled appropriately.

(5) The field windings 70 is not limited to a configuration including the first winding 71 and the second winding 72. For example, the field windings 70 may be configured such that the winding sections of each main pole 62 are connected in series without being divided between first winding 71 and second winding 72, with diode connected to both ends of field windings 70, or diode and capacitor connected in parallel.

In other words, in the above embodiment, the pole coils of each magnetic pole were configured using the winding unit 110, which consists of two coil modules (the first coil module 111 the and second coil module 112) per magnetic pole. However, this may be modified such that the pole coils of each magnetic pole are configured using a single coil module per magnetic pole.

(6) In the stator 50, the stator core may be a stator core without teeth.

(7) The motor is not limited to a motor used as a vehicle main motor; it may, for example, be a motor used as an ISG (Integrated Starter Generator), which is both a motor and a generator.

(8) The mobile object to which a motor system is mounted is not limited to a vehicle but may, for example, be an aircraft or a ship. Furthermore, the motor system is not limited to a system mounted on a mobile object but may also be a stationary system.

The technical concept derived from the above embodiments is described below.

### [Configuration 1]

A wound-field motor comprising:
a stator (50) having stator windings (52);
a rotor (60) having a rotor core (61) and the field windings (70) wound around the rotor core;
a first circuit module (141) connected to the field windings and positioned near a first rotor end (X1), which is one end of the rotor core in the axial direction; and
a second circuit module (142) connected to field windings and positioned near a second rotor end (X2), which is another end of the rotor core in the axial direction, wherein
each of the first circuit module and the second circuit module rotates integrally with the rotor and includes electrical components.

### [Configuration 2]

The wound-field motor according to configuration 1, wherein
the rotor core is provided with a plurality of main poles (62) that protrude radially for each magnetic pole arranged circumferentially,
the field windings constitute a plurality of pole coils (110) formed by winding wirings around each main pole,
the plurality of pole coils are divided into pole coils belonging to a first coil group and pole coils belonging to a second coil group, and
the winding ends of the first coil group are electrically connected to the electrical components of the first circuit module, and the winding ends of the second coil group are electrically connected to the electrical components of the second circuit module.

### [Configuration 3]

The wound-field motor according to configuration 2, wherein
an end of the wiring of the pole coils included in the first coil group is drawn out toward the side of the first rotor end and is electrically connected to the electrical component of the first circuit module at the side of the first rotor end,
an end of the wiring of the pole coils included in the second coil group is drawn out toward the side of the second rotor end and is electrically connected to the electrical component of the second circuit module at the side of the second rotor end.

### [Configuration 4]

The wound-field motor according to configuration 2, wherein
the rotor core comprises an even number and equal to or greater than four main poles, and in the rotor core, the pole coils included in the first coil group and the pole coils included in the second coil group are arranged in a circumferential direction, alternating one by one.

### [Configuration 5]

The wound-field motor according to configuration 2, wherein
the rotor core comprises 4×n (where n is an integer) of the main poles, and
in each main pole arranged circumferentially in the rotor core, the pole coils included in the first coil group and the pole coils included in the second coil group are arranged alternately in pairs in the circumferential direction.

### [Configuration 6]

The wound-field motor according to any one of configurations 2 to 5, wherein
a high-frequency current for inducing a field current in the field windings flows through the stator windings (40),
each of the first circuit module and the second circuit module comprises a diode (91, 93) and a capacitor (92, 94) as the electrical components, and an electrical circuit configured to rectify the field currents in the first coil group and the second coil group, respectively, when the stator windings are energized.

### [Configuration 7]

The wound-field motor (40) according to configuration 1, wherein
a high-frequency current for inducing a field current in the field windings flows through the stator windings,
the field windings comprise a first winding (71) wound radially outward and a second winding (72) wound radially inward on a plurality of main poles (62) provided on the rotor core,
the first winding is connected in series with the second winding,
the electrical circuit module includes:
   a first closed circuit connected to both ends of one of the first winding and the second winding and configured to rectify the current flowing through the one of the first winding and the second winding in one direction when the stator winding is energized; and
   a second closed circuit connected to both ends of the series connection of the first winding and the second winding and configured to rectify the current flowing through the series connection in one direction when the stator winding is energized, and
   the electrical components constituting the first closed circuit are mounted to the first circuit module, and the electrical components constituting the second closed circuit are mounted to the second circuit module.

### [Configuration 8]

The wound-field motor according to configuration 1, further comprising
a first coolant supply unit for supplying coolant to the first circuit module, and a second coolant supply unit for supplying coolant to the second circuit module.

## Claims

1. A wound-field motor comprising:
a stator (50) having stator windings (52);
a rotor (60) having a rotor core (61) and field windings (70) wound around the rotor core;
a first circuit module (141) connected to the field windings and positioned near a first rotor end (X1), which is one end of the rotor core in the axial direction; and
a second circuit module (142) connected to the field windings and positioned near a second rotor end (X2), which is another end of the rotor core in the axial direction, wherein
each of the first circuit module and the second circuit module rotates integrally with the rotor and includes electrical components.

2. The wound-field motor according to claim 1, wherein
the rotor core is provided with a plurality of main poles (62) that protrude radially for each magnetic pole arranged circumferentially,
the field windings constitute a plurality of pole coils (110) formed by winding wirings around each main pole,
the plurality of pole coils are divided into pole coils belonging to a first coil group and pole coils belonging to a second coil group, and
the winding ends of the first coil group are electrically connected to the electrical components of the first circuit module, and the winding ends of the second coil group are electrically connected to the electrical components of the second circuit module.

3. The wound-field motor according to claim 2, wherein
an end of the wiring of the pole coils included in the first coil group is drawn out toward the side of the first rotor end and is electrically connected to the electrical component of the first circuit module at the side of the first rotor end,
an end of the wiring of the pole coils included in the second coil group is drawn out toward the side of the second rotor end and is electrically connected to the electrical component of the second circuit module at the side of the second rotor end.

4. The wound-field motor according to claim 2, wherein
the rotor core comprises an even number and equal to or greater than four or poles, and in the rotor core, the pole coils included in the first coil group and the pole coils included in the second coil group are arranged in a circumferential direction, alternating one by one.

5. The wound-field motor according to claim 2, wherein
the rotor core comprises 4×n (where n is an integer) of the main poles, and
in each main pole arranged circumferentially in the rotor core, the pole coils included in the first coil group and the pole coils included in the second coil group are arranged alternately in pairs in the circumferential direction.

6. The wound-field motor according to any one of claims 2 to 5, wherein
a high-frequency current for inducing a field current in the field windings flows through the stator windings (40),
each of the first circuit module and the second circuit module comprises a diode (91, 93) and a capacitor (92, 94) as the electrical components, and an electrical circuit configured to rectify the field currents in the first coil group and the second coil group, respectively, when the stator windings are energized.

7. The wound-field motor (40) according to claim 1, wherein
a high-frequency current for inducing a field current in the field windings flows through the stator windings,
the field windings comprise a first winding (71) wound radially outward and a second winding (72) wound radially inward on a plurality of main poles (62) provided on the rotor core,
the first winding is connected in series with the second winding,
the electrical circuit module includes:
a first closed circuit connected to both ends of one of the first winding and the second winding and configured to rectify the current flowing through the one of the first winding and the second winding in one direction when the stator winding is energized; and
a second closed circuit connected to both ends of the series connection of the first winding and the second winding and configured to rectify the current flowing through the series connection in one direction when the stator winding is energized, and
the electrical components constituting the first closed circuit are mounted to the first circuit module, and the electrical components constituting the second closed circuit are mounted to the second circuit module.

8. The wound-field motor according to claim 1, further comprising
a first coolant supply unit for supplying coolant to the first circuit module, and a second coolant supply unit for supplying coolant to the second circuit module.
